# FASCICULE DE BREVET EUROPEEN

(11) **EP 4 288 984 B1**
(45) Date de publication et mention de la délivrance du brevet: **07.10.2026**
(21) Numéro de dépôt: 22702321.5
(22) Date de dépôt: 02.02.2022
(51) Int. Cl.: H01F 7/02, H02K 15/03, H02K 21/24, H02K 1/27, H01F 41/02, H02K 1/2795

(54) **STRUCTURE D'AIMANT À PLUSIEURS AIMANTS UNITAIRES À SOLIDARISATION RENFORCÉE**
MAGNETSTRUKTUR MIT EINER VIELZAHL VON EINZELMAGNETEN MIT VERSTÄRKTER VERBINDUNG
MAGNET STRUCTURE HAVING A PLURALITY OF INDIVIDUAL MAGNETS HAVING A REINFORCED CONNECTION

(30) Priorité: 05.02.2021 FR 2101152
(43) Date de publication de la demande: 13.12.2023
(73) Titulaire: Whylot, 46100 Cambes (FR)
(72) Inventeur: MIHAILA, Vasile, 46100 Figeac (FR); RAVAUD, Romain, 46240 Labastide-Murat (FR)
(86) Numéro de dépôt international: PCT/IB2022/050882
(87) Numéro de publication internationale: WO 2022/167941

(56) Documents cités:
- CN-A- 112 039 238
- JP-A- 2006 238 565
- JP-A- H1 198 729
- US-A1- 2020 169 129
- US-B1- 6 359 359

## Description

La présente invention concerne une structure d'aimant à plusieurs aimants unitaires avec une solidarisation renforcée entre les aimants ainsi qu'un moteur ou une génératrice électromagnétique équipé d'au moins une telle structure d'aimant.

La présente invention trouve une application avantageuse mais non limitative pour un actionneur électromagnétique rotatif délivrant une forte puissance avec une vitesse de rotation du rotor élevée, ce qui est obtenu par l'utilisation d'une ou de structures d'aimant selon la présente invention.

Ainsi, avantageusement mais non limitativement, l'actionneur peut être un actionneur rotatif pouvant comprendre au moins un rotor encadré par deux stators, ces éléments pouvant se superposer les uns par rapport aux autres en étant séparés par au moins un entrefer sur un même arbre.

Dans des applications à haute vitesse, il est nécessaire d'avoir non seulement un système compact rendu possible par la réduction de la masse et de l'encombrement de l'actionneur électromagnétique pour un rendement optimal, mais également une très bonne tenue mécanique de la partie tournante ou en translation, c'est-à-dire le rotor ou l'élément en translation linéaire, afin d'améliorer la fiabilité du système.

Pour un moteur à forte puissance, le rotor tourne à des vitesses de rotation élevées. Le principal désavantage d'un moteur à forte vitesse de rotation réside dans la probabilité élevée de détachement de l'aimant ou des aimants du rotor ainsi que de casse au moins partielle du rotor. Le rotor d'un tel moteur doit donc être apte à supporter des vitesses de rotation élevées.

Il est aussi nécessaire de réduire les pertes obtenir un rendement optimal.

Pour un moteur à flux axial, ces pertes peuvent se produire dans le ou les rotors du moteur électrique ou dans les aimants.

En ce qui concerne les rotors, les pertes par courant de Foucault dans les aimants ont été considérablement réduites, notamment en proposant des rotors sans fer ou en proposant des pôles d'aimant constitués d'une pluralité d'aimants unitaires de petite taille.

Par exemple, le document EP3602743 (A1) propose une structure d'aimant en trois dimensions constituée d'une pluralité d'aimants unitaires. Chaque aimant unitaire est sous la forme d'un plot allongé présentant une longueur s'étendant selon l'épaisseur de la structure d'aimant.

Les aimants unitaires sont positionnés dans la structure d'aimant à distance les uns des autres afin d'être isolés électriquement les uns par rapport aux autres.

Une telle configuration a donné grandement satisfaction quant à la réduction des pertes par courant de Foucault. Cependant elle requiert un procédé de fabrication compliqué du fait de la nécessité du positionnement des aimants unitaires les uns par rapport aux autres. De plus, il s'est avéré que la résistance mécanique d'une telle structure d'aimant devrait être augmentée dans des situations d'utilisation spécifiques.

Pour réduire ces inconvénients, il a aussi été proposé de réunir localement les aimants unitaires par la formation d'un talon plan commun à tous les aimants unitaires et se trouvant à mi-hauteur de la structure d'aimant. Cette solution s'est montrée déficiente au niveau des pertes par aimants unitaires, ce qui annihile tous les bénéfices apportés par l'emploi d'aimants unitaires par rapport à un pôle d'aimant composée uniquement d'un unique gros aimant. Il existe donc un fort préjugé contre l'emploi d'une telle technique de solidarisation par talon commun d'aimants unitaires entre eux dans une structure d'aimant.

Le document CN112039238(A) décrit une structure d'aimant en trois dimensions dont une hauteur. La structure d'aimant présente des découpes s'étendant selon la hauteur de la structure d'aimant et formant des groupes de découpes, les découpes de chaque groupe étant interrompues en formant chacune deux parties dans le sens de la hauteur de la découpe et en laissant subsister un intervalle rempli de matière entre les deux parties d'une même découpe.

Les intervalles remplis de matière d'un groupe de découpes forment une portion d'un organe pouvant s'apparenter à un talon d'un seul tenant commun à tous les groupes de découpes, les découpes délimitant entre elles des aimants unitaires maintenus solidaires entre eux par le talon.

Dans ce document CN112039238(A), les découpes sont sous forme de rainures de faible profondeur. L'espace rempli de matière entre des rainures deux à deux opposées chacun sur un de deux côtés opposés de la structure d'aimant formant l'organe s'apparentant à un talon s'étend dans une part très majoritaire de la hauteur de la structure d'aimant. Ceci présente le désavantage que la réduction des courants de Foucault qui était pourtant le but du document CN112039238(A) est affaiblie du fait de la non-séparation des aimants unitaires par découpe.

Le problème à la base de la présente invention est de concevoir une structure d'aimant pour un actionneur électromagnétique qui puisse supporter des vitesses de travail élevées tout en fournissant un champ magnétique puissant, tout en étant de fabrication simple et en présentant une résistance mécanique élevé.

A cet effet la présente invention concerne une structure d'aimant en trois dimensions dont une hauteur, la structure d'aimant présentant des découpes s'étendant selon la hauteur de la structure d'aimant et formant des groupes de découpes, les découpes de chaque groupe étant interrompues en formant chacune deux parties dans le sens de la hauteur de la découpe et en laissant subsister un intervalle rempli de matière entre les deux parties d'une même découpe, les intervalles remplis de matière d'un groupe de découpes formant une portion d'un talon d'un seul tenant commun à tous les groupes de découpes, les découpes délimitant entre elles des aimants unitaires maintenus solidaires entre eux par le talon, où chaque intervalle rempli de matière présente une hauteur comprise entre 2 à 20% d'une hauteur totale de la découpe, entre les deux parties de laquelle subsiste ledit intervalle, au moins un intervalle rempli de matière entre une découpe d'un groupe se trouvant à une hauteur différente d'au moins un intervalle rempli de matière entre une découpe d'un autre groupe afin que les portions de talon des différents groupes de découpes s'étendent au moins partiellement sur des niveaux de hauteur différents dans la structure d'aimant.

Il avait été proposé de remplacer un ou plusieurs aimants de taille importante par une pluralité de petits aimants. Dans ce cas, il y a donc une création de flux magnétique par une multitude de petits aimants dont le nombre peut être d'au moins 20 et peut même dépasser 100 par pôle d'aimant.

La présente invention entend conserver ces avantages tout en rendant encore chaque structure d'aimant plus résistante. En effet, la présence d'un talon solidarisant les aimants unitaires entre eux renforce cette résistance. D'une analyse de l'état de la technique relatif à une structure d'aimant comprenant un talon, régnait un préjugé contre l'utilisation d'une solidarisation des aimants unitaires entre eux par la présence d'un talon commun.

Il a été en effet constaté que la présence d'un talon plan commun aux aimants unitaires dans la structure d'aimant annulait ou diminuait notoirement tous les avantages apportés par l'utilisation d'aimants unitaires, notamment par apparition de pertes par courants de Foucault.

De manière totalement inattendue, la demanderesse a observé qu'un talon, d'un seul tenant de matière aimantée, mais aussi composé de portions de talon successifs propres à des groupes de découpes, ces portions de talon successifs s'étendant selon différentes hauteurs dans la structure d'aimant et conférant ainsi à l'ensemble une forme pouvant être en zig-zag en ne s'étendant pas dans un unique plan permettait de conserver les avantages procurés par une utilisation d'aimants unitaires dans la structure d'aimant tout en renforçant la solidité de la structure d'aimant.

Selon la présente invention, en opposition à un talon plan reliant les aimants unitaires conformément à un état de la technique, les portions de talon sont d'un seul tenant mais s'étendent à des niveaux différents dans la structure d'aimant selon leur groupe de découpes. Il y a donc des différences de niveau de hauteur ou des échelons entre deux bords adjacents de portions de talon successifs associés à deux groupes de découpes différents.

Il s'est avéré que ces différences de niveau de hauteur ou sauts de hauteur permettaient de réduire les pertes par courants de Foucault en comparaison à une structure d'aimant comportant un talon plan, ces pertes étant sensiblement équivalentes à celles d'aimants unitaires ne présentant pas de talon.

La hauteur des intervalles remplis de matière qui correspond à l'épaisseur du talon doit répondre à deux exigences contradictoires.

Premièrement, cette hauteur des intervalles remplis de matière doit être suffisamment grande pour renforcer la solidité de la structure d'aimant et la solidarisation des aimants unitaires entre eux.

Deuxièmement et en contradiction avec la première exigence, cette hauteur des intervalles remplis de matière doit être suffisamment faible pour ne pas augmenter les pertes par courants de Foucault.

La demanderesse a constaté qu'une plage de 2 à 20%, préférentiellement de 2 à 10%, pour la hauteur des intervalles remplis de matière par rapport à la hauteur totale des découpes répondait à ces deux exigences.

La présente invention permet donc de combiner les avantages d'une structure d'aimant à talon dont une facilité de fabrication associée à un plus grand maintien des aimants unitaires avec les avantages d'une structure d'aimant à aimants unitaires indépendants, avantages qui ont été précédemment cités.

Le talon ainsi formé est de la même matière magnétique que les aimants unitaires, le tout étant obtenu par travail à partir d'une ébauche de la structure d'aimant en matière magnétique.

Avantageusement, les découpes traversent de part en part la structure d'aimant en s'étendant d'un côté de la structure d'aimant vers un autre côté qui lui est opposé, un groupe de découpes associé à un côté s'intersectant avec au moins un groupe de découpes associé à un autre côté ou un groupe de découpes étant prolongé par au moins un autre groupe de découpes autour des aimants unitaires. Par exemple, pour une section rectangulaire ou carrée de la structure d'aimant, les groupes de découpes forment un quadrillage en s'intersectant.

Dans une autre configuration, par exemple pour une section hexagonale de la structure d'aimant avec des aimants unitaires hexagonaux et plus largement pour une section à plus de quatre côtés, les découpes d'un groupe de découpes selon un des côtés sont complétées par des découpes selon deux autres côtés ou plus.

Avantageusement, les découpes d'un même groupe de découpes s'étendent parallèlement les unes aux autres.

Avantageusement, les intervalles remplis de matière présentent une même dimension prise dans la hauteur de la structure d'aimant pour tous les groupes de découpe.

Avantageusement, les découpes d'un même groupe de découpes présentent leurs intervalles remplis de matière à au moins deux niveaux différents de hauteur. Il s'ensuit des portions de talon associées à un même groupe de découpes présentant des échelons, ce qui donne un talon commun avec encore plus d'échelons que pour des groupes de découpe présentant chacun des découpes avec des intervalles remplis de matière à la même hauteur.

Avantageusement, en position de maintien vertical de la hauteur de la structure d'aimant, ledit au moins un intervalle rempli de matière entre la découpe d'un groupe présente son extrémité la plus haute à hauteur égale à la hauteur d'une extrémité la plus basse dudit au moins un intervalle rempli de matière entre la découpe d'un autre groupe.

Ceci est une réalisation préférentielle mais non limitative de la présente invention. Cette configuration est celle qui présente le moins de pertes par courants de Foucault.

Avantageusement, les portions de talon des groupes de découpes s'étendent au moins partiellement sur un nombre de niveaux de hauteur inférieur ou égal au nombre de côtés d'un aimant unitaire.

Par exemple, pour une section rectangulaire ou carrée de la structure d'aimant, il y a deux groupes de découpes avec des découpes du premier groupe perpendiculaires aux découpes du deuxième groupe.

Dans une autre configuration, par exemple pour une section hexagonale de la structure d'aimant avec des aimants unitaires hexagonaux et plus largement pour une section à plus de quatre côtés des aimants unitaires, il peut y avoir plus de trois groupes de découpes différents, ce nombre étant au plus égal à la moitié des côtés des aimants unitaires.

Avantageusement, chaque aimant unitaire subit une découpe auxiliaire s'étendant selon la hauteur de la structure d'aimant et séparant l'aimant unitaire en deux portions égales, les découpes auxiliaires des aimants unitaires étant aussi interrompues en formant chacune deux parties dans le sens de la hauteur de la structure d'aimant et en laissant subsister un intervalle rempli de matière entre les deux parties d'une même découpe auxiliaire.

Des aimants unitaires de section triangulaire peuvent ainsi être obtenus à partir d'aimant unitaires de section carrée ou rectangulaire.

Avantageusement, les intervalles remplis de matière se trouvent dans une zone encadrant avec plus ou moins 20% une mi-hauteur de la structure d'aimant.

Le fait de prévoir un talon à mi-hauteur des aimants unitaires renforce la solidité de la structure d'aimant en égalisant son maintien dans ses parties haute et basse. Avantageusement, les découpes sont remplies d'une couche de composite non conductrice enrobant les aimants unitaires.

Ceci renforce encore la solidarisation des aimants unitaires entre eux et la tenue de la structure d'aimant. Avantageusement, un rapport d'une section d'un aimant unitaire sur une section de la structure d'aimant est inférieur à 20%, un périmètre de chaque aimant unitaire étant inférieur à la hauteur de l'aimant unitaire.

Ceci accroît les avantages conférés par des aimants unitaires. Plus la section des aimants unitaires est petite avec des aimants unitaires plus nombreux dans la structure d'aimant et plus les avantages relatifs à l'utilisation d'aimants unitaires précédemment mentionnés sont renforcés.

L'invention concerne aussi un moteur ou génératrice électromagnétique linéaire ou rotatif, caractérisé en ce qu'il comprend une telle unique structure d'aimant ou plusieurs telles structures d'aimant, la ou les structures d'aimant formant pôles d'aimant en un ensemble rectangulaire ou faisant partie d'un rotor rotatif autour de son centre, la ou les structures d'aimant étant disposées concentriquement au rotor.

Un tel moteur peut être avantageusement un moteur à flux axial.

Par exemple, pour un moteur à flux axial, un ou plusieurs rotors de l'état de la technique pouvaient comprendre de 1 à 10 gros aimants formant pôles d'aimant alors que la présente invention prévoit beaucoup plus d'aimants de petite taille dans chaque structure d'aimant formant un pôle d'aimant.

Il convient de ne pas confondre un pôle d'aimant, un rotor pouvant en porter par exemple de cinq à dix voire plus, avec les aimants unitaires qui sont nettement plus nombreux, un rotor pouvant en porter par exemple plusieurs centaines.

Ceci permet d'obtenir un rotor qui, entre autres avantages, peut tourner à grande vitesse et qui ne comprend pas de fer, ce qui limite les pertes rotoriques.

De plus, du fait d'un talon s'étendant de manière non plane dans la ou chaque structure d'aimant, la résistance de la ou de chaque structure d'aimant est renforcée tandis que les avantages précédemment mentionnés obtenus par l'emploi de petits aimants unitaires sont conservés.

Avantageusement, chaque structure d'aimant est enrobée individuellement dans une couche de composite.

Cette mesure renforce encore la résistance mécanique de la structure d'aimant prise en un tout.

L'invention concerne enfin un procédé de fabrication d'une telle structure d'aimant, selon la revendication 14. Il s'ensuit une fabrication simplifiée de la structure d'aimant. Lors d'un procédé de fabrication d'une structure d'aimant à plusieurs aimants unitaires selon l'état de la technique, quand les aimants unitaires ne sont pas solidarisés entre eux avant qu'une couche de composite ne les unisse, ces aimants unitaires sont difficiles à maintenir en position. La présence d'un maillage pour maintenir les aimants unitaires peut ainsi être requis, ce qui complexifie le procédé de fabrication.

De même, lors de la mise en œuvre d'un procédé de fabrication d'une structure d'aimant selon l'état de la technique, il pouvait être nécessaire de couper l'ébauche de structure d'aimant en laissant un talon pour le maintien des aimants unitaires, d'injecter un composite autour des aimants unitaires, de couper le talon puis d'injecter du composite une deuxième fois, contrairement à la présente invention pour laquelle les portions de talon restent à demeure dans la structure d'aimant en formant le talon sur plusieurs hauteurs reliant tous les aimants unitaires entre eux.

Les dessins annexés illustrent l'invention :
[Fig 1] représente une vue en perspective d'une structure d'aimant selon une première forme de réalisation de la présente invention,
[Fig 2] représente une vue en coupe selon les flèches A et B de la structure d'aimant montrée à la figure 1,
[Fig 3] représente une vue en coupe selon la flèche C de la structure d'aimant montrée à la figure 1,
[Fig 4] représente une vue en perspective d'une structure d'aimant selon une deuxième forme de réalisation de la présente invention,
[Fig 5] représente une vue en coupe selon les flèches A et B de la structure d'aimant montrée à la figure 4,
[Fig 6] représente une vue en coupe selon la flèche C de la structure d'aimant montrée à la figure 4,
[Fig 7] représente une vue en perspective d'une structure d'aimant selon une troisième forme de réalisation de la présente invention,
[Fig 8] représente une vue en coupe selon la flèche C de la structure d'aimant montrée à la figure 7,
[Fig 9] représente une vue en perspective d'une structure d'aimant selon une quatrième et une cinquième forme de réalisation de la présente invention,
[Fig 10] représente une vue en coupe selon la flèche C de la structure d'aimant montrée à la figure 9, ceci pour la quatrième forme de réalisation de la présente invention,
[Fig 11] représente une vue en coupe selon la flèche C de la structure d'aimant montrée à la figure 9, ceci pour la cinquième forme de réalisation de la présente invention,
[Fig 12] représente une vue de face d'un rotor pouvant être associé à une structure d'aimant comme montré aux figures 1 à 11 afin de former un moteur ou une génératrice électromagnétique conformément à la présente invention.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

Aux figures, quand présents, seul un aimant unitaire est référencé 3 et seul une structure d'aimant ou pôle d'aimant est référencé 2 mais ce qui est énoncé respectivement pour l'aimant unitaire 3 et la structure ou le pôle d'aimant 2 est valide pour tous les aimants unitaires et les structures d'aimant.

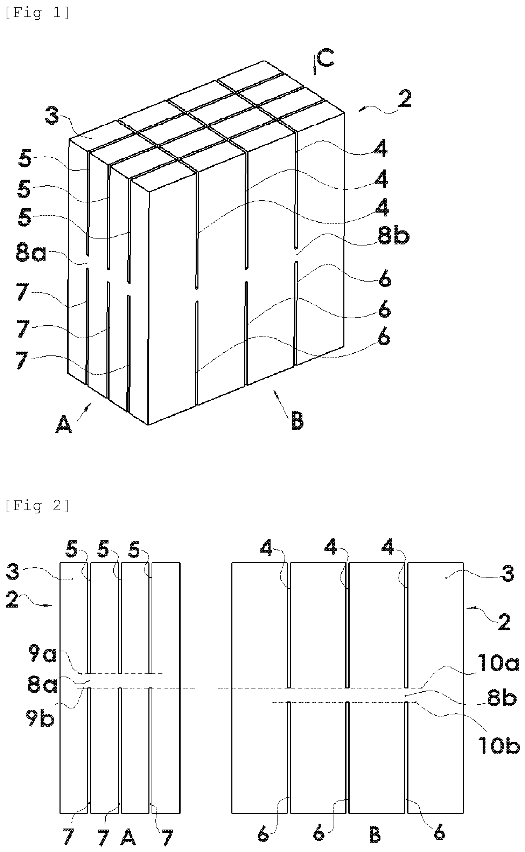

En se référant principalement aux figures 1 à 11, la présente invention concerne une structure d'aimant 2 en trois dimensions dont une hauteur.

Cette structure d'aimant 2 peut être de section triangulaire donc à trois côtés, carrée ou rectangulaire donc à quatre côtés ou polygonale d'un nombre de côtés supérieur ou égal à 4. Quand présents, des côtés opposés de la structure d'aimant 2 ne sont pas forcément parallèles.

Il est aussi possible que la structure d'aimant 2 soit de section circulaire en étant de forme cylindrique.

Il en ira de même pour les aimants unitaires qui composent cette structure d'aimant 2.

Conformément à une caractéristique essentielle de la présente invention, lors de sa fabrication, la structure d'aimant 2 présente des découpes 4 à 7, 20, 21 s'étendant selon la hauteur de la structure d'aimant 2 et formant des groupes de découpes, comme il est vu plus particulièrement aux figures 1, 4, 7 et 9.

Les découpes 4 à 7, 20, 21 de chaque groupe sont interrompues en formant chacune deux parties 4, 6; 5, 7; 20, 21 dans le sens de la hauteur de la découpe. Un intervalle rempli de matière subsiste alors entre les deux parties 4, 6; 5, 7; 20, 21 d'une même découpe, la matière étant aussi magnétique car provenant de la structure d'aimant 2.

Les intervalles remplis de matière d'un groupe de découpes 4 à 7, 20, 21 forment une portion 8a à 8d d'un talon. Ce talon sera d'un seul tenant et commun à tous les groupes de découpes, tout en gardant des spécificités pour chaque groupe de découpes 4 à 7, 20, 21.

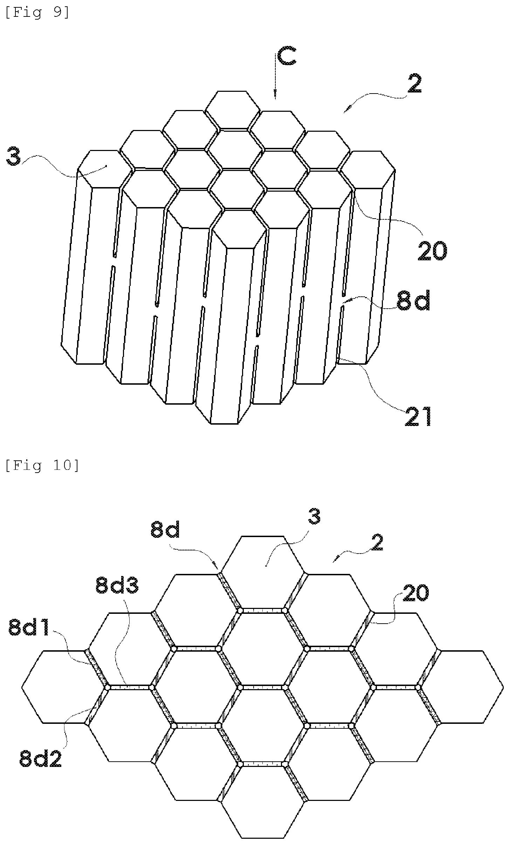

Les découpes 4 à 7, 20, 21 de différents groupes peuvent se croiser comme dans le cas d'une structure d'aimant 2 à section carrée ou rectangulaire montrée notamment aux figures 1 à 8 ou se prolonger les unes aux autres comme montré pour une structure d'aimant 2 avec des aimants unitaires 3 à section hexagonale montrée aux figures 9 à 11.

Toutes les découpes 4 à 7, 20, 21 prises ensemble délimitent entre elles des aimants unitaires 3 maintenus solidaires entre eux par le talon se composant de plusieurs portions 8a à 8d de talon associées à différents groupes. Afin que le talon commun ne soit pas plan, au moins un intervalle rempli de matière entre une découpe d'un groupe se trouve à une hauteur différente d'au moins un intervalle rempli de matière entre une découpe d'un autre groupe de découpes.

De ce fait, les portions 8a à 8d de talon des différents groupes de découpes s'étendent au moins partiellement sur des niveaux de hauteur différents dans la structure d'aimant 2 et donnent un talon commun avec des échelons. Sans que cela soit limitatif en étant purement illustratif, les aimants unitaires 3 sont sous la forme de plots avec un talon de 1 millimètre pouvant être positionné à mi-hauteur de l'aimant unitaire.

L'état de la technique propose trois configurations : une configuration avec une structure d'aimant pleine sans découpe d'aimants unitaires, une configuration avec une structure d'aimant à aimants unitaires ne comprenant pas de talon c'est à dire de matière aimantée de la structure d'aimant les solidarisant et une configuration avec une structure d'aimant comprenant un talon plan de matière aimantée solidarisant les aimants unitaires.

La présente invention propose la configuration principale avec une structure d'aimant 2 à aimants unitaires 3 solidarisés par un talon échelonné s'étendant à diverses hauteurs dans la structure d'aimant 2.

Des expériences menées par la demanderesse ont montré que la configuration la plus favorable à la diminution des pertes par courants de Foucault était une structure d'aimant à aimants unitaires ne comprenant pas de talon, conformément à la deuxième configuration de l'état de la technique.

Les pertes par courants de Foucault avec une structure d'aimant sans aimants unitaires conformément à la première configuration sont au moins 60 fois plus élevées que pour la deuxième configuration et les pertes par courants de Foucault avec une structure d'aimant avec aimants unitaires solidarisés par un talon plan conformément à la troisième configuration sont au moins 9 fois plus élevées que pour la deuxième configuration.

Par contre, la configuration conforme à la présente invention avec une structure d'aimant 2 à aimants unitaires solidarisés par un talon échelonné s'étendant à diverses hauteurs dans la structure d'aimant 2 présente des pertes à peine plus élevées que pour la structure d'aimant 2 à aimants unitaires non solidarisés par de la matière aimantée en ne présentant pas de talon, ces pertes étant 1,16 fois plus élevées que pour la deuxième configuration de l'état de la technique.

Cette augmentation des pertes par courants de Foucault est cependant notoirement compensée par la facilité de fabrication d'une telle structure d'aimant 2 selon l'invention. Lors de la fabrication d'une structure d'aimant à aimants unitaires non solidarisés par un talon, avant une injection de composite entre les aimants unitaires pour les maintenir ensemble, ces aimants unitaires ont tendance à s'écarter les uns des autres.

De plus, même avec injection de composite entre les aimants unitaires, une telle structure d'aimant selon la deuxième configuration de l'état de la technique aura une résistance mécanique moindre que la structure d'aimant 2 proposée par la présente invention, le talon échelonné reliant tous les aimants unitaires 3 en étant de matière aimantée en un seul tenant avec les aimants unitaires 3 renforçant considérablement la résistance mécanique de la structure d'aimant 2.

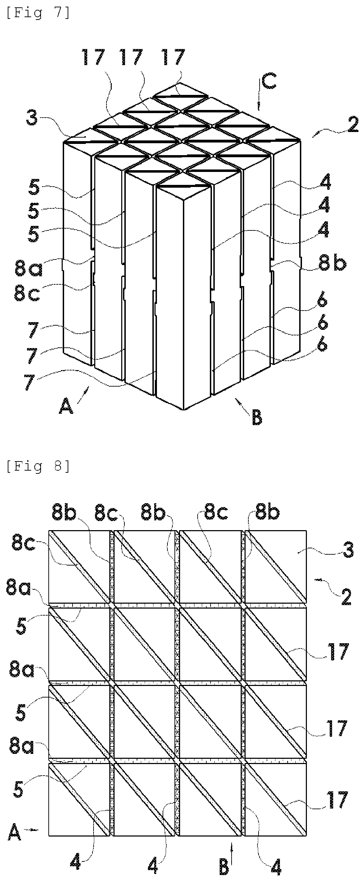

Les découpes 4 à 7 peuvent traverser de part en part la structure d'aimant 2, c'est-à-dire dans les deux dimensions de la structure d'aimant 2 autres que sa hauteur, en s'étendant d'un côté de la structure d'aimant 2 vers un autre côté qui lui est opposé, un groupe de découpes 4, 6 associé à un côté s'intersectant avec au moins un groupe de découpes 5, 7 associé à un autre côté. Ceci est le cas pour les trois formes de réalisation montrées aux figures 1 à 8, les figures 1 à 6 montrant une structure d'aimant 2 rectangulaire ou carrée avec des aimants unitaires 3 rectangulaires ou carrés, les figures 7 à 8 montrant une structure d'aimant 2 approximativement carrée avec des aimants unitaires 3 séparés en deux moitiés de section triangulaire.

La structure d'aimant 2 montrée aux figures 1 à 8 peut avoir cependant une autre forme que celle montrée respectivement à ces figures. Par exemple, pour les figures 1 à 6, la structure d'aimant 2 peut être de section carrée ou circulaire avec des aimants unitaires carrés ou cylindriques et pour les figures 7 et 8, la structure d'aimant 2 peut être de section rectangulaire ou circulaire avec des aimants unitaires 3 rectangulaires ou cylindriques.

Pour une structure d'aimant 2 à section carrée, les aimants unitaires 3 alors de section carrée peuvent aussi ne pas être divisés en deux aimants de section triangulaire et donc conserver leur section carrée, contrairement à ce qui est montré à la figure 7.

Comme illustré aux figures 1 à 8, les découpes 4, 6 ; 5, 7 d'un même groupe de découpes peuvent s'étendre parallèlement les unes aux autres. Il existe dans ce cas un autre groupe de découpe comprenant des découpes 4, 6 qui s'étendant perpendiculairement aux découpes 5, 7 du premier groupe.

Les figures 1 à 3 montrent une structure d'aimant 2 rectangulaire avec des aimants unitaires 3 rectangulaires. Les découpes 4, 6 en hauteur s'étendant dans la largeur de la structure d'aimant 2 dites découpes latérales présentent deux parties référencées respectivement 4 et 6 et sont toutes interrompues au même niveau de hauteur. Entre les parties 4, 6 de ces découpes latérales est formé une partie de talon latéral 8b par l'intervalle rempli de matière subsistant entre les deux parties 4, 6 de ces découpes latérales.

Dans cette première forme optionnelle de réalisation de la présente invention, les découpes en hauteur s'étendant dans la longueur de la structure d'aimant 2 dites découpes longitudinales 5, 7 présentent deux parties référencées respectivement 5 et 7 et sont toutes interrompues au même niveau de hauteur mais à une hauteur différente des découpes latérales 4, 6.

Entre les parties 5, 7 de ces découpes longitudinales est formé une partie de talon longitudinal 8a par l'intervalle rempli de matière subsistant entre les deux parties 5 et 7 de ces découpes longitudinales.

A la figure 2, qui montre des vues selon les flèches A et B de la figure 1, il est illustré une ligne 9a montrant l'extrémité inférieure de la partie supérieure 5 des découpes longitudinales et une ligne 9b montrant l'extrémité supérieure de la partie inférieure 7 des découpes longitudinales. Les lignes 9a et 9b délimitent entre elles une partie de talon longitudinal 8a.

Il est aussi illustré une ligne 10a montrant l'extrémité inférieure de la partie supérieure 4 des découpes latérales et une ligne 10b montrant l'extrémité supérieure de la partie inférieure 6 des découpes longitudinales. Les lignes 10a et 10b délimitent entre elles une partie de talon longitudinal 8b.

Il s'ensuit que, dans le mode de réalisation des figures 1 à 3, toutes les extrémités inférieures 9a, 10a des parties 5, 4 de découpe longitudinale ou respectivement latérale sont alignées entre elles pour chaque groupe et toutes les extrémités supérieures 9b, 10b des parties 7, 6 de découpe longitudinale ou respectivement latérale sont alignées entre elles pour un même groupe de découpes.

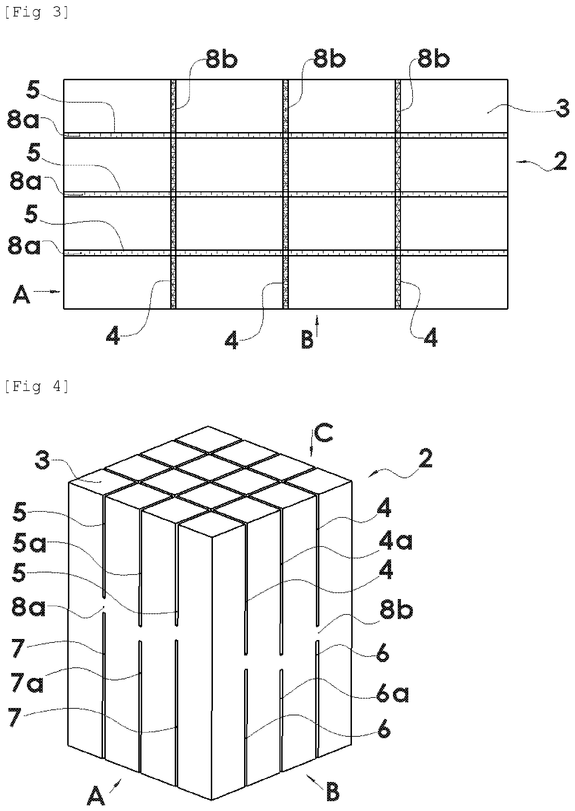

Comme il peut être le mieux vu à la figure 3 qui est une vue selon la flèche C de la figure 1, il n'existe que deux hauteurs de talon, chacune identifiée par des hachures spécifiques, pour le talon commun composé d'une partie de talon latéral 8b et d'une partie de talon longitudinal 8a. Le talon commun est donc échelonné sur deux hauteurs dans la structure d'aimant 2.

Dans cette première forme optionnelle de réalisation de la présente invention, les intervalles remplis de matière d'un même groupe de découpes peuvent se trouver au même niveau de hauteur.

Les figures 4 à 6 représente une deuxième forme optionnelle de réalisation d'une structure d'aimant 2 carrée ou rectangulaire selon la présente invention. La structure d'aimant 2 est montrée avec une section carrée mais ce qui est dit peut être applicable à une structure d'aimant 2 rectangulaire.

Cette deuxième forme de réalisation diffère de la première en ce que toutes les découpes latérales et respectivement toutes les découpes longitudinales ne sont pas interrompues au même niveau de hauteur. A la figure 1, sans que cela soit limitatif les première et troisième découpes latérales en deux parties 4, 6 sont interrompues à un autre niveau que la deuxième découpe latérale en deux parties 4a, 6a.

De même, les première et troisième découpes longitudinales en deux parties 5, 7 sont interrompues à un autre niveau que la deuxième découpe longitudinale en deux parties 5a, 7a.

Il est à noter qu'il pourrait y avoir plus de trois découpes longitudinales ou latérales dans la structure d'aimant 2.

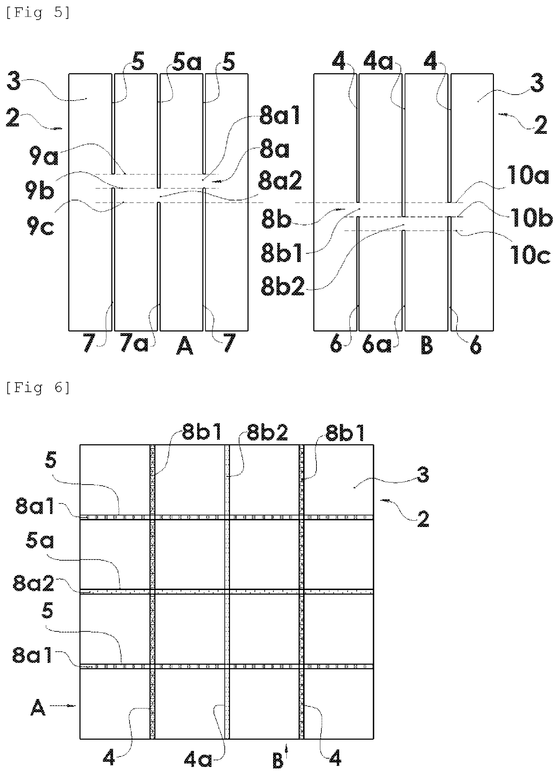

Ainsi à la figure 5, il est illustré une ligne 9a montrant l'extrémité inférieure de la partie supérieure 5 des première et troisième découpes longitudinales et une ligne 9b montrant l'extrémité supérieure de la partie inférieure 7 des première et troisième découpes longitudinales. Les lignes 9a et 9b délimitent entre elles une partie de talon longitudinal 8a1.

De plus, il est illustré une ligne 9b montrant l'extrémité inférieure de la partie supérieure 5a de la deuxième découpe longitudinale et une ligne 9c montrant l'extrémité supérieure de la partie inférieure 7a de la deuxième découpe longitudinale. Les lignes 9a et 9b délimitent entre elles une partie de talon longitudinal 8a2.

Il est à noter que l'extrémité inférieure de la partie supérieure 5a de la deuxième découpe longitudinale n'est pas forcément à la hauteur de l'extrémité supérieure de la partie inférieure 7 des première et troisième découpes longitudinales, ce qui est un cas particulier non limitatif.

Dans ce cas, il existe deux échelons pour une partie de talon longitudinal 8a formée des parties de talon longitudinal 8a1 et 8a2.

Il en va de même pour la partie de talon latéral 8b formée des parties de talon latéral 8b1 et 8b2 délimitée respectivement par les lignes 10a et 10b pour les première et troisième découpes latérales avec des parties 4 et 6, et par les lignes 10b et 10c pour la deuxième découpe latérale avec des parties 4a et 6a.

A la figure 5 qui montre des vues selon les flèches A et B de la figure 4, l'extrémité inférieure de la partie supérieure 4a de la deuxième découpe latérale est alignée avec l'extrémité supérieure de la partie inférieure 6 des première et troisième découpes latérale. Ceci n'est en aucun cas obligatoire bien que préféré.

Comme il peut être le mieux vu à la figure 6 qui est une vue selon la flèche C de la figure 4, il peut exister alors quatre hauteurs de talon, chacune identifiée par des hachures spécifiques, pour le talon commun composé de deux parties de talon latéral 8a1 et 8a2 et de deux parties de talon longitudinal 8b1 et 8b2, ceci si un des talons latéraux 8a1 et 8a2 n'est pas à la même hauteur qu'un des talons longitudinaux 8b1 et 8b2.

Le talon commun est donc échelonné sur au moins trois hauteurs dans la structure d'aimant 2.

Ainsi, dans cette deuxième forme optionnelle de réalisation d'une structure d'aimant 2 conformément à la présente invention, les intervalles remplis de matière d'un même groupe de découpes peuvent se trouver à des niveaux différents. Il est possible d'avoir, dans ce cas, une alternance des intervalles remplis de matière de différents niveaux mais ceci n'est pas obligatoire.

Les figures 7 et 8 montrent une troisième forme optionnelle de réalisation d'une structure d'aimant 2 conformément à la présente invention.

A la figure 7, la structure d'aimant 2 est carrée de même que les aimants unitaires, ce qui encore une fois n'est pas obligatoire. Aux figures 7 et 8, il est montré des découpes latérales en deux parties 4, 6 s'interrompant toutes à la même hauteur tandis que les découpes longitudinales en deux parties 5, 7 s'interrompent toutes à une même hauteur différente de celle de l'interruption des découpes latérales. Ceci n'est pas limitatif pour cette troisième forme optionnelle de réalisation.

Dans cette troisième forme optionnelle de réalisation, chaque aimant unitaire 3 peut subir une découpe auxiliaire 17 s'étendant selon la hauteur de la structure d'aimant 2 et séparant l'aimant unitaire 3 en deux portions égales, avantageusement de section triangulaire, sans que cela soit limitatif.

Comme les découpes latérales et longitudinales, les découpes auxiliaires 17 des aimants unitaires 3 peuvent aussi être interrompues en formant chacune deux parties dans le sens de la hauteur de la structure d'aimant 2 et en laissant subsister un intervalle rempli de matière entre les deux parties d'une même découpe auxiliaire 17.

Dans l'illustration des figures 7 et 8, les découpes auxiliaires 17 rejoignent d'un côté une découpe latérale avec des parties 4, 6 et de l'autre une découpe longitudinale avec des parties 5, 7.

En plus des parties de talon latéral et longitudinal 8b et 8a, la structure d'aimant 2 présente une partie de talon auxiliaire 8c de découpe auxiliaire 17 aussi en deux parties.

Comme il peut être le mieux vu à la figure 8 qui est une vue selon la flèche C de la figure 7, il existe alors trois hauteurs de talon, chacune identifiée par des hachures spécifiques, pour le talon commun composé d'une partie de talon latéral 8b, d'une partie de talon longitudinal 8a et d'une partie de talon auxiliaire 8c.

Le talon commun est donc échelonné sur au moins trois hauteurs dans la structure d'aimant 2 quand la hauteur de la partie de talon auxiliaire 8c n'est pas égale à une hauteur soit d'une partie de talon latéral 8b ou une partie de talon longitudinal 8a.

Pour toutes ces formes de réalisation, en position de maintien vertical de la hauteur de la structure d'aimant 2, comme montré aux figures 2 et 5, il est possible mais non obligatoire qu'un intervalle rempli de matière entre la découpe d'un groupe, par exemple un groupe de découpes latérales 4, 6 formant une partie de talon latéral 8b présente son extrémité la plus haute à hauteur égale à la hauteur d'une extrémité la plus basse d'un intervalle rempli de matière entre la découpe d'un autre groupe, par exemple un groupe de découpes longitudinales 5, 7 formant une partie de talon longitudinal 8a.

Les deuxième et troisième formes de réalisation optionnelle de la présente invention peuvent aussi être combinées entre elles.

Les figures 9 à 11 illustrent une quatrième et une cinquième formes optionnelles de réalisation d'une structure d'aimant 2 conformément à la présente invention.

Les figures 9 à 11 montrent une structure d'aimant 2 à facettes lui conférant un pourtour de forme approximativement rectangulaire mais qui pourrait aussi être autre.

Aux figures 9 à 11, les aimants unitaires 3, délimités par les découpes 20, 21, sont de section hexagonale mais tout ce qui va être énoncé ci-après pour cette section hexagonale peut être appliqué à toute section polygonale à plus de quatre côtés.

La section hexagonale des aimants unitaires 3 est délimitée par six découpes 20, 21 pour un aimant unitaire qui n'est pas au bord de la structure d'aimant 2.

A la figure 9, la référence 8d montre une portion d'un talon commun à tous les aimants unitaires 3 et à la structure d'aimant 2, cette portion de talon commun étant visible sur le pourtour de la structure d'aimant 2.

Chaque découpe se compose de deux parties 20 et 21 laissant entre elle un intervalle rempli de matière entre les deux parties 20, 21 d'une même découpe.

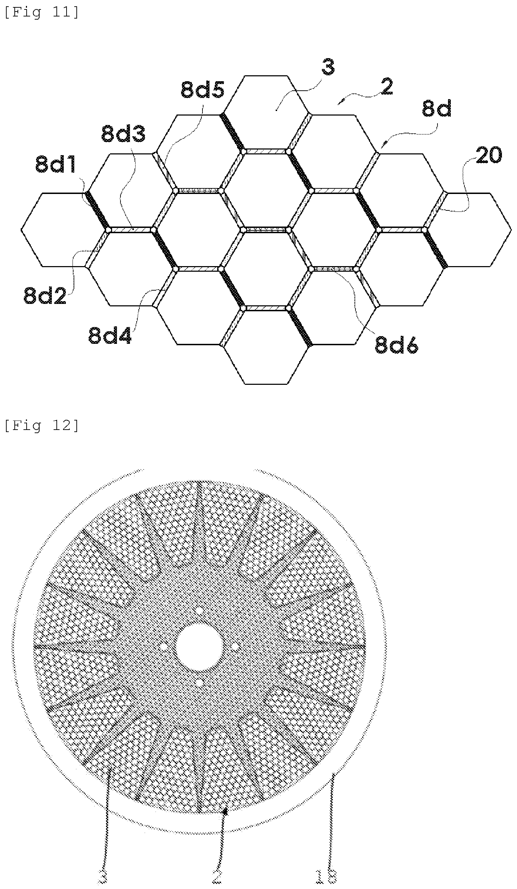

Les intervalles remplis de matière d'un groupe de découpes 20, 21 forment une portion d'un talon commun comme il sera mieux vu aux figures 10 et 11. De plus, les intervalles remplis de matière se trouvent dans une zone encadrant avec plus ou moins 20% une mi-hauteur de la structure d'aimant 2.

Les figures 10 et 11 illustrent deux formes de réalisation différant par le nombre de parties de talon se trouvant à deux hauteurs différentes, ces différentes parties de talon n'ayant pas été visibles à la figure 9 car interne à la structure d'aimant 2.

En se référant tout d'abord à la figure 10 qui est une vue selon la flèche C de la figure 9, conformément à la quatrième forme optionnelle, il est montré trois niveaux de hauteur différents de partie de talon, les trois niveaux étant illustrés par des hachures différentes. Un talon commun 8d est composé par trois types de parties de talon 8d1, 8d2, 8d3 échelonnant le talon commun 8d sur trois niveaux de hauteur.

En se référant ensuite à la figure 11 qui est une vue en coupe selon la flèche C de la figure 9, conformément à la cinquième forme optionnelle, il est montré six niveaux de hauteur différents de partie de talon, les six niveaux étant illustrés par des hachures différentes. Un talon commun 8d est composé par six types de parties de talon 8d1, 8d2, 8d3, 8d4, 8d5, 8d6 échelonnant le talon commun 8d sur six niveaux de hauteur.

Comme montré aux figures 10 à 11 avec des aimants unitaires 3 de forme hexagonale, une structure d'aimant 2 peut présenter des groupes de découpe avec un groupe de découpes 20, 21 prolongé par au moins un autre groupe de découpes, avantageusement deux autres groupes de découpe.

Les découpes 20, 21 d'un même groupe de découpes peuvent être avantageusement parallèles entre elles.

En se référant à toutes les figures, pour toutes les formes de réalisation, les intervalles remplis de matière peuvent présenter une même dimension prise dans la hauteur de la structure d'aimant 2 pour tous les groupes de découpe.

De manière générale, notamment pour des aimants unitaires 3 avec des sections polygonales à plus de quatre côtés, les portions 8d1 à 8d6 de talon des groupes de découpes peuvent s'étendre au moins partiellement sur un nombre de niveaux de hauteur inférieur ou égal au nombre de côtés d'un aimant unitaire 3.

Pour ordre de grandeur et sans que cela soit limitatif, les intervalles remplis de matière donc les épaisseurs de parties 8a à 8d de talon peuvent présenter une hauteur comprise entre 2 à 20% d'une hauteur totale des découpes 4 à 7, 20, 21.

Lors de la fabrication d'une structure d'aimant 2, les découpes 4 à 7, 20, 21 peuvent être remplies d'une couche de composite non conductrice enrobant les aimants unitaires 3, la couche de composite étant avantageusement renforcée de fibres.

Comme les aimants unitaires 3 sont de section relativement petite par rapport à la structure d'aimant 2 afin d'avoir le plus grand nombre d'aimants unitaires pour une structure d'aimant 2, un rapport d'une section d'un aimant unitaire sur une section de la structure d'aimant 2 peut être inférieur à 20% et préférentiellement inférieur à 10%.

De même, un périmètre de chaque aimant unitaire 3 peut être inférieur à la hauteur de l'aimant unitaire 3, afin d'avoir un aimant unitaire 3 sous forme d'un plot allongé. Comme déjà mentionné mais non montré aux figures, les aimants unitaires peuvent être cylindriques donc de section circulaire.

Il est alors possible de découper chaque aimant unitaire par au moins deux découpes se complétant qui présentent des intervalles remplis de matière à des niveaux différents de hauteur.

Il est aussi possible de prévoir pour au moins deux aimants unitaires proches l'un de l'autre des découpes, partielles ou non, présentant des intervalles remplis de matière à des niveaux différents de hauteur pour chacun des deux aimants unitaires. Il est aussi possible de combiner ces deux configurations mentionnées.

Un aimant unitaire cylindrique est alors entouré de quatre aimants unitaires cylindriques avec une section de la découpe de l'aimant unitaire tangentielle en quatre points différents respectivement avec une section de chacune des découpes des aimants unitaires voisins.

Dans cette disposition, subsistent entre les découpes des aimants unitaires des zones de la structure d'aimant qui peuvent être conservées en tant qu'aimants unitaires car isolés des autres aimants unitaires par des découpes bien que ces zones ne soient pas de section circulaire. En alternative, ces zones peuvent être enlevées de la structure d'aimant.

L'invention concerne aussi un moteur ou génératrice électromagnétique linéaire ou rotatif comprenant une unique structure d'aimant 2 ou plusieurs structures d'aimant 2 telles que précédemment décrites.

La ou les structures d'aimant 2 forment des pôles d'aimant en un ensemble rectangulaire pour un moteur électromagnétique linéaire ou faisant partie d'un rotor rotatif autour de son centre pour un moteur électromagnétique rotatif. Dans cette dernière configuration, la ou les structures d'aimant 2 sont disposées concentriquement au rotor.

La figure 12 montre un tel rotor 18 avec plusieurs structures 2 d'aimant. Dans une machine électromagnétique selon la présente invention, le ou chaque rotor 18 peut comporter une pluralité de structures 2 d'aimant en tant que pôles d'aimant, dont un seul est référencé à la figure 12.

Le ou chaque rotor 18 peut être en composite pour diminuer les pertes en fer. Chaque pôle d'aimant qui est sous la forme d'une structure d'aimant 2 peut être constitué d'une pluralité d'aimants unitaires 3 solidarisés les uns aux autres, par du composite, de la colle ou de la résine.

De plus, pour renforcer la solidité du pôle d'aimant 2, chaque pôle d'aimant 2 peut être enrobé individuellement dans une couche de composite.

Au regard de la figure 12, il a été décrit précédemment essentiellement un moteur électromagnétique rotatif à flux axial mais la présente invention peut s'appliquer à tout type de moteur, notamment un moteur ou une génératrice à flux radial ou à flux mixte rotatif ou linéaire.

En se référant à toutes les figures, l'invention concerne enfin un procédé de fabrication d'une telle structure d'aimant 2.

L'étape essentielle du procédé selon l'invention est la réalisation dans une ébauche de structure d'aimant 2 de plusieurs groupes de découpes, les découpes 4 à 7, 20, 21 de chaque groupe étant interrompues en formant chacune deux parties 4, 6; 5, 7; 20, 21 dans le sens de la hauteur de la découpe et en laissant subsister un intervalle rempli de matière entre les deux parties 4, 6; 5, 7; 20, 21 d'une même découpe.

L'ébauche de structure d'aimant 2 peut présenter la même forme extérieure que la structure d'aimant 2 à obtenir.

Les découpes 4 à 7, 20, 21 sont interrompues à des hauteurs différentes de sorte qu'au moins un intervalle rempli de matière entre une découpe d'un groupe se trouve à une hauteur différente d'au moins un intervalle rempli de matière entre une découpe d'un autre groupe, ce qui laisse un talon non plan 8a à 8d comprenant un ou plusieurs échelons.

Il est possible de réaliser les découpes 4 à 7, 20, 21 selon plusieurs process, par exemple sans que cela soit limitatif par électroérosion ou une découpe par fil équivalente ou par emploi d'un Laser. Pour des formes complexes à plus de quatre côtés, il est possible d'utiliser une cloche de découpe pour toutes les découpes 4 à 7, 20, 21.

## Revendications

1. Structure d'aimant (2) en trois dimensions dont une hauteur, la structure d'aimant (2) présentant des découpes (4 à 7, 20, 21) s'étendant selon la hauteur de la structure d'aimant (2) et formant des groupes de découpes, les découpes (4 à 7, 20, 21) de chaque groupe étant interrompues en formant chacune deux parties (4, 6; 5, 7; 20, 21) dans le sens de la hauteur de la découpe et en laissant subsister un intervalle rempli de matière entre les deux parties (4, 6; 5, 7; 20, 21) d'une même découpe, les intervalles remplis de matière d'un groupe de découpes (4 à 7, 20, 21) formant une portion d'un talon (8a à 8d) d'un seul tenant commun à tous les groupes de découpes, les découpes (4 à 7, 20, 21) délimitant entre elles des aimants unitaires (3) maintenus solidaires entre eux par le talon (8a à 8d), où chaque intervalle rempli (20) de matière présente une hauteur comprise entre 2 à 20% d'une hauteur totale de la découpe (4 à 7, 20, 21), entre les deux parties de laquelle subsiste ledit intervalle, au moins un intervalle rempli de matière entre une découpe (4, 6) d'un groupe se trouvant à une hauteur différente d'au moins un intervalle rempli de matière entre une découpe (5, 7) d'un autre groupe afin que les portions de talon (8a à 8d) des différents groupes de découpes s'étendent au moins partiellement sur des niveaux de hauteur différents dans la structure d'aimant (2).

2. Structure d'aimant (2) selon la revendication précédente, dans laquelle les découpes (4 à 7) traversent de part en part la structure d'aimant (2) en s'étendant d'un côté de la structure d'aimant (2) vers un autre côté qui lui est opposé, un groupe de découpes (4, 6) associé à un côté s'intersectant avec au moins un groupe de découpes (5, 7) associé à un autre côté ou un groupe de découpes (20, 21) étant prolongé par au moins un autre groupe de découpes autour des aimants unitaires (3).

3. Structure d'aimant (2) selon la revendication précédente, dans laquelle les découpes (4, 6 ; 5, 7 ; 20, 21) d'un même groupe de découpes s'étendent parallèlement les unes aux autres.

4. Structure d'aimant (2) selon l'une quelconque des revendications précédentes, dans laquelle les intervalles remplis de matière présentent une même dimension prise dans la hauteur de la structure d'aimant (2) pour tous les groupes de découpe.

5. Structure d'aimant (2) selon l'une quelconque des revendications précédentes, dans laquelle les découpes (4, 6 ; 5, 7 ; 20, 21) d'un même groupe de découpes présentent leurs intervalles remplis de matière à au moins deux niveaux différents de hauteur.

6. Structure d'aimant (2) selon l'une quelconque des revendications précédentes, dans laquelle, en position de maintien vertical de la hauteur de la structure d'aimant (2), ledit au moins un intervalle rempli de matière entre la découpe d'un groupe présente son extrémité la plus haute à hauteur égale à la hauteur d'une extrémité la plus basse dudit au moins un intervalle rempli de matière entre la découpe d'un autre groupe.

7. Structure d'aimant (2) selon l'une quelconque des revendications précédentes, dans laquelle les portions de talon (8a à 8d) des groupes de découpes s'étendent au moins partiellement sur un nombre de niveaux de hauteur inférieur ou égal au nombre de côtés d'un aimant unitaire (3).

8. Structure d'aimant (2) selon l'une quelconque des revendications précédentes, dans laquelle chaque aimant unitaire (3) subit une découpe auxiliaire (17) s'étendant selon la hauteur de la structure d'aimant (2) et séparant l'aimant unitaire (3) en deux portions égales, les découpes auxiliaires (17) des aimants unitaires (3) étant aussi interrompues en formant chacune deux parties dans le sens de la hauteur de la structure d'aimant (2) et en laissant subsister un intervalle rempli de matière entre les deux parties d'une même découpe auxiliaire (17).

9. Structure d'aimant (2) selon l'une quelconque des revendications précédentes, dans laquelle les intervalles remplis de matière se trouvent dans une zone encadrant avec plus ou moins 20% une mi-hauteur de la structure d'aimant (2).

10. Structure d'aimant (2) selon l'une quelconque des revendications précédentes, dans laquelle les découpes (4 à 7, 20, 21) sont remplies d'une couche de composite non conductrice enrobant les aimants unitaires.

11. Structure d'aimant (2) selon la revendication précédente, dans laquelle un rapport d'une section d'un aimant unitaire (3) sur une section de la structure d'aimant (2) est inférieur à 20%, un périmètre de chaque aimant unitaire (3) étant inférieur à la hauteur de l'aimant unitaire.

12. Moteur ou génératrice électromagnétique linéaire ou rotatif, **caractérisé en ce qu'**il comprend une unique structure d'aimant (2) ou plusieurs structures d'aimant (2) selon l'une quelconque des revendications précédentes, la ou les structures d'aimant (2) formant pôles d'aimant en un ensemble rectangulaire ou faisant partie d'un rotor (18) rotatif autour de son centre, la ou les structures d'aimant (2) étant disposées concentriquement au rotor (18).

13. Moteur ou génératrice selon la revendication précédente, dans laquelle chaque structure d'aimant (2) est enrobée individuellement dans une couche de composite.

14. Procédé de fabrication d'une structure d'aimant (2) selon l'une quelconque des revendications 1 à 11, **caractérisé par** les étapes suivantes :
- insertion dans une ébauche de structure d'aimant (2) de plusieurs groupes de découpes, les découpes (4 à 7, 20, 21) de chaque groupe étant interrompues en formant chacune deux parties (4, 6; 5, 7; 20, 21) dans le sens de la hauteur de la découpe et en laissant subsister un intervalle rempli de matière entre les deux parties (4, 6; 5, 7; 20, 21) d'une même découpe, chaque intervalle rempli de matière présentant une hauteur comprise entre 2 à 20% d'une hauteur totale de la découpe, entre les deux parties de laquelle subsiste ledit intervalle,
- au moins un intervalle rempli de matière entre une découpe d'un groupe se trouvant à une hauteur différente d'au moins un intervalle rempli de matière entre une découpe d'un autre groupe.

## Patentansprüche

1. Dreidimensionale Magnetstruktur (2), deren eine Abmessung eine Höhe ist, wobei die Magnetstruktur (2) Ausschnitte (4 bis 7, 20, 21) aufweist, die sich entlang der Höhe der Magnetstruktur (2) erstrecken und Gruppen von Ausschnitten bilden, wobei die Ausschnitte (4 bis 7, 20, 21) jeder Gruppe unterbrochen sind und jeweils zwei Teile (4, 6; 5, 7; 20, 21) in Richtung der Höhe des Ausschnitts bilden und dabei einen mit Material gefüllten Zwischenraum zwischen den beiden Teilen (4, 6; 5, 7; 20, 21) ein und desselben Ausschnitts bestehen lassen, wobei die mit Material gefüllten Zwischenräume einer Gruppe von Ausschnitten (4 bis 7, 20, 21) einen Abschnitt eines einstückigen, allen Gruppen von Ausschnitten gemeinsamen Stegs (8a bis 8d) bilden, wobei die Ausschnitte (4 bis 7, 20, 21) zwischen sich Einzelmagnete (3) begrenzen, die durch den Steg (8a bis 8d) fest miteinander verbunden gehalten werden, wobei jeder mit Material gefüllte Zwischenraum (20) eine Höhe zwischen 2 und 20 % einer Gesamthöhe des Ausschnitts (4 bis 7, 20, 21) aufweist, zwischen dessen beiden Teilen der genannte Zwischenraum verbleibt, wobei sich mindestens ein mit Material gefüllter Zwischenraum zwischen einem Ausschnitt (4, 6) einer Gruppe auf einer anderen Höhe befindet als mindestens ein mit Material gefüllter Zwischenraum zwischen einem Ausschnitt (5, 7) einer anderen Gruppe, damit sich die Stegabschnitte (8a bis 8d) der verschiedenen Gruppen von Ausschnitten zumindest teilweise auf unterschiedlichen Höhenniveaus in der Magnetstruktur (2) erstrecken.

2. Magnetstruktur (2) nach dem vorhergehenden Anspruch, bei der die Ausschnitte (4 bis 7) die Magnetstruktur (2) vollständig durchsetzen, indem sie sich von einer Seite der Magnetstruktur (2) zu einer dieser gegenüberliegenden anderen Seite erstrecken, wobei sich eine einer Seite zugeordnete Gruppe von Ausschnitten (4, 6) mit mindestens einer einer anderen Seite zugeordneten Gruppe von Ausschnitten (5, 7) schneidet, oder wobei eine Gruppe von Ausschnitten (20, 21) durch mindestens eine andere Gruppe von Ausschnitten um die Einzelmagnete (3) herum verlängert ist.

3. Magnetstruktur (2) nach dem vorhergehenden Anspruch, bei der sich die Ausschnitte (4, 6; 5, 7; 20, 21) ein und derselben Gruppe von Ausschnitten parallel zueinander erstrecken.

4. Magnetstruktur (2) nach einem der vorhergehenden Ansprüche, bei der die mit Material gefüllten Zwischenräume für alle Gruppen von Ausschnitten dieselbe, in der Höhe der Magnetstruktur (2) genommene Abmessung aufweisen.

5. Magnetstruktur (2) nach einem der vorhergehenden Ansprüche, bei der die Ausschnitte (4, 6; 5, 7; 20, 21) ein und derselben Gruppe von Ausschnitten ihre mit Material gefüllten Zwischenräume auf mindestens zwei unterschiedlichen Höhenniveaus aufweisen.

6. Magnetstruktur (2) nach einem der vorhergehenden Ansprüche, bei der in einer Position, in der die Höhe der Magnetstruktur (2) vertikal gehalten wird, der mindestens eine mit Material gefüllte Zwischenraum zwischen dem Ausschnitt einer Gruppe sein oberstes Ende auf einer Höhe aufweist, die gleich der Höhe eines untersten Endes des mindestens einen mit Material gefüllten Zwischenraums zwischen dem Ausschnitt einer anderen Gruppe ist.

7. Magnetstruktur (2) nach einem der vorhergehenden Ansprüche, bei der sich die Stegabschnitte (8a bis 8d) der Gruppen von Ausschnitten zumindest teilweise über eine Anzahl von Höhenniveaus erstrecken, die kleiner oder gleich der Anzahl der Seiten eines Einzelmagneten (3) ist.

8. Magnetstruktur (2) nach einem der vorhergehenden Ansprüche, bei der jeder Einzelmagnet (3) einen Hilfsausschnitt (17) erfährt, der sich entlang der Höhe der Magnetstruktur (2) erstreckt und den Einzelmagneten (3) in zwei gleiche Abschnitte trennt, wobei die Hilfsausschnitte (17) der Einzelmagnete (3) ebenfalls unterbrochen sind und jeweils zwei Teile in Richtung der Höhe der Magnetstruktur (2) bilden und dabei einen mit Material gefüllten Zwischenraum zwischen den beiden Teilen ein und desselben Hilfsausschnitts (17) bestehen lassen.

9. Magnetstruktur (2) nach einem der vorhergehenden Ansprüche, bei der sich die mit Material gefüllten Zwischenräume in einem Bereich befinden, der eine halbe Höhe der Magnetstruktur (2) mit plus oder minus 20 % umschließt.

10. Magnetstruktur (2) nach einem der vorhergehenden Ansprüche, bei der die Ausschnitte (4 bis 7, 20, 21) mit einer Schicht aus nicht leitfähigem Verbundwerkstoff gefüllt sind, welche die Einzelmagnete umhüllt.

11. Magnetstruktur (2) nach dem vorhergehenden Anspruch, bei der ein Verhältnis eines Querschnitts eines Einzelmagneten (3) zu einem Querschnitt der Magnetstruktur (2) kleiner als 20 % ist, wobei ein Umfang jedes Einzelmagneten (3) kleiner als die Höhe des Einzelmagneten ist.

12. Linearer oder rotatorischer elektromagnetischer Motor oder Generator, **dadurch gekennzeichnet, dass** er eine einzige Magnetstruktur (2) oder mehrere Magnetstrukturen (2) nach einem der vorhergehenden Ansprüche umfasst, wobei die Magnetstruktur bzw. die Magnetstrukturen (2) Magnetpole in einer rechteckigen Anordnung bilden oder Teil eines um seinen Mittelpunkt drehbaren Rotors (18) sind, wobei die Magnetstruktur bzw. die Magnetstrukturen (2) konzentrisch zum Rotor (18) angeordnet sind.

13. Motor oder Generator nach dem vorhergehenden Anspruch, bei dem jede Magnetstruktur (2) einzeln in eine Schicht aus Verbundwerkstoff eingebettet ist.

14. Verfahren zur Herstellung einer Magnetstruktur (2) nach einem der Ansprüche 1 bis 11, **gekennzeichnet durch** die folgenden Schritte:
- Einbringen mehrerer Gruppen von Ausschnitten in einen Rohling einer Magnetstruktur (2), wobei die Ausschnitte (4 bis 7, 20, 21) jeder Gruppe unterbrochen sind und jeweils zwei Teile (4, 6; 5, 7; 20, 21) in Richtung der Höhe des Ausschnitts bilden und dabei einen mit Material gefüllten Zwischenraum zwischen den beiden Teilen (4, 6; 5, 7; 20, 21) ein und desselben Ausschnitts bestehen lassen, wobei jeder mit Material gefüllte Zwischenraum eine Höhe zwischen 2 und 20 % einer Gesamthöhe des Ausschnitts aufweist, zwischen dessen beiden Teilen der genannte Zwischenraum verbleibt,
- wobei sich mindestens ein mit Material gefüllter Zwischenraum zwischen einem Ausschnitt einer Gruppe auf einer anderen Höhe befindet als mindestens ein mit Material gefüllter Zwischenraum zwischen einem Ausschnitt einer anderen Gruppe.

## Claims

1. Three-dimensional magnet structure (2), one dimension of which is a height, the magnet structure (2) having cut-outs (4 to 7, 20, 21) extending along the height of the magnet structure (2) and forming groups of cut-outs, the cut-outs (4 to 7, 20, 21) of each group being interrupted, each forming two parts (4, 6; 5, 7; 20, 21) in the direction of the height of the cut-out and leaving a material-filled gap between the two parts (4, 6; 5, 7; 20, 21) of one and the same cut-out, the material-filled gaps of a group of cut-outs (4 to 7, 20, 21) forming a portion of a one-piece heel (8a to 8d) common to all the groups of cut-outs, the cut-outs (4 to 7, 20, 21) delimiting between them unitary magnets (3) held secured to one another by the heel (8a to 8d), wherein each material-filled gap (20) has a height of between 2 and 20% of a total height of the cut-out (4 to 7, 20, 21) between the two parts of which said gap remains, at least one material-filled gap between a cut-out (4, 6) of one group being at a height different from at least one material-filled gap between a cut-out (5, 7) of another group, so that the heel portions (8a to 8d) of the different groups of cut-outs extend at least partially at different height levels in the magnet structure (2).

2. Magnet structure (2) according to the preceding claim, in which the cut-outs (4 to 7) pass right through the magnet structure (2), extending from one side of the magnet structure (2) towards another side opposite thereto, a group of cut-outs (4, 6) associated with one side intersecting with at least one group of cut-outs (5, 7) associated with another side, or a group of cut-outs (20, 21) being extended by at least one other group of cut-outs around the unitary magnets (3).

3. Magnet structure (2) according to the preceding claim, in which the cut-outs (4, 6; 5, 7; 20, 21) of one and the same group of cut-outs extend parallel to one another.

4. Magnet structure (2) according to any one of the preceding claims, in which the material-filled gaps have a same dimension, taken in the height of the magnet structure (2), for all the groups of cut-outs.

5. Magnet structure (2) according to any one of the preceding claims, in which the cut-outs (4, 6; 5, 7; 20, 21) of one and the same group of cut-outs have their material-filled gaps at at least two different height levels.

6. Magnet structure (2) according to any one of the preceding claims, in which, in a position in which the height of the magnet structure (2) is held vertically, said at least one material-filled gap between the cut-out of one group has its uppermost end at a height equal to the height of a lowermost end of said at least one material-filled gap between the cut-out of another group.

7. Magnet structure (2) according to any one of the preceding claims, in which the heel portions (8a to 8d) of the groups of cut-outs extend at least partially over a number of height levels less than or equal to the number of sides of a unitary magnet (3).

8. Magnet structure (2) according to any one of the preceding claims, in which each unitary magnet (3) is subjected to an auxiliary cut-out (17) extending along the height of the magnet structure (2) and separating the unitary magnet (3) into two equal portions, the auxiliary cut-outs (17) of the unitary magnets (3) also being interrupted, each forming two parts in the direction of the height of the magnet structure (2) and leaving a material-filled gap between the two parts of one and the same auxiliary cut-out (17).

9. Magnet structure (2) according to any one of the preceding claims, in which the material-filled gaps are located in a zone framing, within plus or minus 20%, a mid-height of the magnet structure (2).

10. Magnet structure (2) according to any one of the preceding claims, in which the cut-outs (4 to 7, 20, 21) are filled with a layer of non-conductive composite coating the unitary magnets.

11. Magnet structure (2) according to the preceding claim, in which a ratio of a cross-section of a unitary magnet (3) to a cross-section of the magnet structure (2) is less than 20%, a perimeter of each unitary magnet (3) being less than the height of the unitary magnet.

12. Linear or rotary electromagnetic motor or generator, **characterized in that** it comprises a single magnet structure (2) or several magnet structures (2) according to any one of the preceding claims, the magnet structure or structures (2) forming magnet poles in a rectangular assembly or forming part of a rotor (18) rotatable about its centre, the magnet structure or structures (2) being arranged concentrically with the rotor (18).

13. Motor or generator according to the preceding claim, in which each magnet structure (2) is individually coated in a layer of composite.

14. Method for manufacturing a magnet structure (2) according to any one of claims 1 to 11, **characterized by** the following steps:
- inserting several groups of cut-outs into a magnet structure blank (2), the cut-outs (4 to 7, 20, 21) of each group being interrupted, each forming two parts (4, 6; 5, 7; 20, 21) in the direction of the height of the cut-out and leaving a material-filled gap between the two parts (4, 6; 5, 7; 20, 21) of one and the same cut-out, each material-filled gap having a height of between 2 and 20% of a total height of the cut-out, between the two parts of which said gap remains,
- at least one material-filled gap between a cut-out of one group being at a height different from at least one material-filled gap between a cut-out of another group.
